# EUROPEAN PATENT APPLICATION

(11) **EP 4 753 202 A1**
(43) Date of publication of application: **03.06.2026**
(21) Application number: 24860319.3
(22) Date of filing: 22.08.2024
(51) Int. Cl.: H04L 7/00, H04W 56/00, H04W 84/12

(54) **ELECTRONIC DEVICE FOR SYNCHRONIZATION AND OPERATION METHOD THEREOF**

(30) Priority: 25.08.2023 KR 20230112328; 02.11.2023 KR 20230150024
(71) Applicant: Samsung Electronics Co., Ltd., Suwon-si, Gyeonggi-do 16677 (KR)
(72) Inventor: KANG, Yongjin, Suwon-si, Gyeonggi-do 16677 (KR); JANG, Duhe, Suwon-si, Gyeonggi-do 16677 (KR); SOH, Byungseok, Suwon-si, Gyeonggi-do 16677 (KR); LEE, Hyungyong, Suwon-si, Gyeonggi-do 16677 (KR); JUNG, Chanho, Suwon-si, Gyeonggi-do 16677 (KR)
(74) Representative: Appleyard Lees IP LLP
(86) International application number: PCT/KR2024/012542
(87) International publication number: WO 2025/048399

(57) **Abstract**

An operating method of an electronic device is disclosed. An electronic device according to an embodiment of the present disclosure may comprise: a communication unit including a first interface and a second interface; and a processor electrically connected to the communication unit via the first interface or the second interface, wherein the processor: requests clock information of the communication unit from the communication unit via the first interface; receives clock information of the communication unit from the communication unit via the first interface; receives an interrupt signal and first time information on a generation time point of the interrupt signal from the communication unit via the second interface; and generates clock information of the processor on the basis of the clock information of the communication unit and the first time information.

## Description

### [TECHNICAL FIELD]

The present disclosure relates generally to electronic devices, and more particularly, to an electronic device and operation method for synchronization.

### [BACKGROUND ART]

As Internet of Things (IoT) technology may develop, various IoT devices (e.g., televisions (TVs), sound output devices, high-definition multimedia interface (HDMI) devices, or the like) may connect to each other to provide various services to users. In order for IoT devices to transmit and receive data with accurate timing, synchronization may be performed between the devices. For example, the devices may perform synchronization based on a clock signal. That is, the clock signal may determine when data may be transferred and/or processed. For example, a clock signal may be used to perform tasks such as, but not limited to, executing instructions of a central processing unit (CPU), accessing data of a random access memory (RAM), transmitting data of an input/output (I/O) device, or the like. As such, data synchronization, and a clock signal, may play an important role in various electronic devices and systems such as, but not limited to, a computer system, an IoT device, a processor inside the IoT device, a transceiver, a memory, or the like. In addition, accuracy and/or efficiency of data processing may be effected by maintaining and managing an accurate clock signal. In order to transmit data from a transmission device to a reception device (e.g., transmit video data to a TV or transmit sound data to a speaker), the devices may perform synchronization. For synchronization, a round-to-trip (RTT) method using an average of round-trip times of signals exchanged between the transmission device and the reception device may be used.

### [DISCLOSURE OF INVENTION]

### [SOLUTION TO PROBLEMS]

According to an aspect of the present disclosure, an electronic device includes a communication circuit including a first interface and a second interface, a memory storing instructions, and a processor communicatively coupled with the communication circuit via the first interface or via the second interface. The processor is configured to execute the instructions to send, to the communication circuit via the first interface, a request for clock information of the communication circuit, receive, from the communication circuit via the first interface, the clock information of the communication circuit, receive, from the communication circuit via the second interface, an interrupt signal and first time information corresponding to the interrupt signal being generated, and generate clock information of the processor based on the clock information of the communication circuit and the first time information.

In an embodiment, the first interface may include a universal serial bus (USB) interface, and the second interface may include a general purpose input output (GPIO) interface.

In an embodiment, the communication circuit may be configured to generate the interrupt signal based on receiving, from the processor, the request for the clock information of the communication circuit.

In an embodiment, the communication circuit may be configured to generate the interrupt signal including the first time information.

In an embodiment, the communication circuit may be further configured to execute the instructions to identify the clock information of the communication circuit based on a first synchronization signal received via the communication circuit.

In an embodiment, the first synchronization signal may include information about a network to which the electronic device is coupled.

In an embodiment, the processor may be further configured to execute the instructions to transmit, to an external electronic device, a synchronization signal, receive, from the external electronic device, an acknowledgement (ACK) signal based on the synchronization signal, and generate the clock information of the processor, based on transmission time information corresponding to the synchronization signal being transmitted and reception time information corresponding to the ACK signal being received.

In an embodiment, the processor may be further configured to execute the instructions to receive, from an external electronic device, a synchronization signal including second time information corresponding to the synchronization signal being transmitted, and generate the clock information of the processor, based on the second time information and reception time information corresponding to the synchronization signal being received.

In an embodiment, the processor may be further configured to execute the instructions to determine whether to correct the clock information of the processor based on a plurality of offset values identified for a predetermined time. The plurality of offset values may be identified based on a difference between the clock information of the communication circuit and the clock information of the processor.

In an embodiment, the processor may be further configured to execute the instructions to correct the clock information of the processor based on identifying that the plurality of offset values continuously increase for the predetermined time or identifying that the plurality of offset values continuously decrease for the predetermined time.

According to an aspect of the present disclosure, a method for operating an electronic device includes sending, to a communication circuit of the electronic device via a first interface of the communication circuit, a request for clock information of the communication circuit, receiving, e via the first interface, the clock information of the communication circuit from the communication circuit, receiving, via a second interface of the communication circuit, an interrupt signal and first time information corresponding to the interrupt signal being generated from the communication circuit, and generating clock information of the processor based on the clock information of the communication circuit and the first time information.

In an embodiment, the sending, to the communication circuit via the first interface, the request for the clock information may include sending, to the communication circuit of the electronic device using an USB interface of the communication circuit, the request for the clock information of the communication circuit from the communication circuit, and the receiving, via the second interface, the interrupt signal and the first time information may include receiving, using a GPIO interface, the interrupt signal and the first time information from the communication circuit.

In an embodiment, wherein the interrupt signal is generated by the communication circuit in response to receiving, from the processor, the request for the clock information of the communication circuit.

In an embodiment, wherein the interrupt signal comprising the first time information.

In an embodiment, wherein the clock information of the communication circuit is identified based on a first synchronization signal received via the communication circuit.

### [BRIEF DESCRIPTION OF DRAWINGS]

FIG. 1 is a block diagram illustrating a configuration of an electronic device, according to an embodiment;
FIG. 2 illustrates an example of an Internet of Things (IoT) network, according to an embodiment;
FIG. 3 is a block diagram illustrating a detailed configuration of an electronic device, according to an embodiment;
FIG. 4 illustrates an operation flow of an electronic device, according to an embodiment;
FIG. 5 illustrates an operation flow of an electronic device, according to an embodiment;
FIG. 6 illustrates an example of synchronization of an electronic device, according to an embodiment; and
FIG. 7 illustrates an operation flow of an electronic device, according to an embodiment.

In connection with the description of the drawings, the same or similar reference numerals may be used to denote the same or similar elements.

### [MODE FOR INVENTION]

The following description with reference to the accompanying drawings is provided to assist in a comprehensive understanding of embodiments of the present disclosure defined by the claims and their equivalents. Various specific details are included to assist in understanding, but these details are considered to be exemplary only. Therefore, those of ordinary skill in the art may recognize that various changes and modifications of the embodiments described herein may be made without departing from the scope and spirit of the disclosure. In addition, descriptions of well-known functions and structures are omitted for clarity and conciseness.

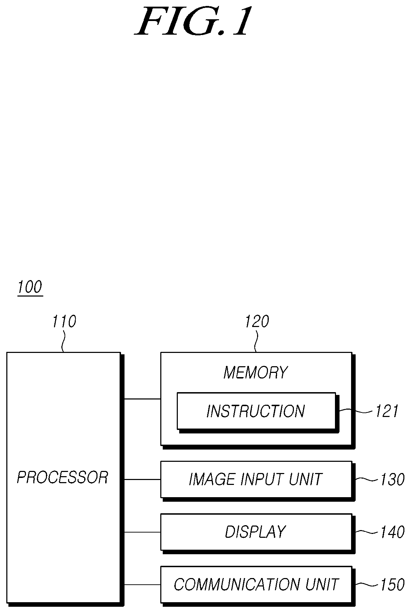

FIG. 1 is a block diagram illustrating a configuration of an electronic device, according to an embodiment. The electronic device 100 may be and/or may include wearable terminals, such as, but not limited to, watches and glasses, that may be capable of performing various computing functions, such as, but not limited to, video watching and communication or the like. The electronic device 100 may be and/or may include various types of terminals without being limited to the above examples.

According to an embodiment, the memory 120 may be and/or may include a storage medium used by the electronic device 100 and may be configured to store data, such as, but not limited to, at least one command (or instruction) 121, configuration information corresponding to at least one program, or the like. The at least one program may be and/or may include an operating system (OS) program and/or various application programs.

In an embodiment, the memory 120 may store pairing information about an external electronic device located adjacent to the electronic device 100. In an embodiment, the pairing information may include, for example, device information about the external electronic device, information about another external electronic device or remote control device paired with the external electronic device, information about a scheme (e.g., Bluetooth^{™} or Wireless-Fidelity (Wi-Fi)) in which the external electronic device and the other external electronic device or remote control device may be paired with each other, or information about a pairing history between the external electronic device and the other external electronic device or remote control device.

In an embodiment, the memory 120 may include at least one type of storage medium of flash memory types, hard disk types, multimedia card micro types, card types of memories (e.g., secure digital (SD) or extreme digital (XD) memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 130 may receive images and image information through a tuner, an input/output (I/O) unit, or the communication circuit 150. The image input unit 130 may include at least one of the tuner and the input/output unit. The tuner may tune and/or select the frequency of the broadcast channel to be received by the electronic device 100 from among many radio components, by amplifying, mixing, and/or resonating the broadcast signals that may be wiredly and/or wirelessly received. The broadcast signal may include, but not be limited to, video, audio, and/or additional data (e.g., electronic program guide (EPG)). The tuner may receive real-time broadcast channels (or real-time viewing images) from various broadcast sources, such as, but not limited to, terrestrial broadcasts, cable broadcasts, satellite broadcasts, Internet broadcasts, or the like. The tuner may be implemented integrally with the electronic device 100 or may be implemented as a separate tuner electrically connected to the electronic device 100. The input/output unit may include at least one of a high definition multimedia interface (HDMI) input port, a component input jack, a personal computer (PC) input port, and a universal serial bus (USB) input jack capable of receiving an image and image information from an external device of the electronic device 100 under the control of the processor 110. It may be apparent that the input/output (I/O) unit may be added, deleted, and/or changed according to the performance and structure of the electronic device 100, and/or according to design constraints.

According to an embodiment, the display 140 may perform functions for outputting information in the form of numbers, characters, images, and/or graphics. The display 140 may include at least one hardware module for output. The at least one hardware module may include at least one of, for example, a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an output unit, a display unit, or by other terms having an equivalent technical meaning. The term screen may refer to an image displayed on the display of the electronic device. The term image may be referred to as a frame. Various types of objects, such as, but not limited to, icons, text, photos, videos, widgets, or the like may be displayed on the screen.

According to an embodiment, the communication circuit 150 may provide a wired and/or wireless communication interface that may enable communication with an external device. The communication circuit 150 may include at least one of a wired Ethernet unit, a wireless local area network (LAN) communication unit, a short-range communication unit, or the like. The wireless LAN communication unit may include, for example, Wi-Fi, and may support a wireless LAN communication standard such as, but not limited to, Institute of Electrical and Electronics Engineers (IEEE) 802.11x. The wireless LAN communication unit may be wirelessly connected to an access point (AP) under the control of the processor 110. An AP may be and/or may include a device for connecting devices by related standards using Wi-Fi in a computer network. The short-range communication unit may perform short-range communication wirelessly with an external device under the control of the processor 110. Short-range communication may include Bluetooth^{™}, Bluetooth Low Energy (BLE), infrared data association (IrDA), ultra-wideband (UWB), near-field communication (NFC), or the like. The external device may include a server device, a mobile terminal (e.g., a smartphone, a tablet computer, or the like) providing a service to a user (e.g., a video service).

According to an embodiment, the processor 110 may control at least one other component of the electronic device 100 and/or may execute computation and/or data processing regarding communication by executing the at least one command 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 110 may execute software (e.g., instructions, commands, a program, firmware, or the like) to control at least one other component (e.g., a hardware or software component) of the electronic device 100 connected with the processor 110 and may process and/or compute various data. According to an embodiment, as at least part of the data processing or computation, the processor 110 may store a command and/or data received from another component onto a volatile memory, process the command and/or the data stored in the volatile memory, and store resulting data in a non-volatile memory. According to an embodiment, the processor 110 may include a main processor (e.g., a CPU or an application processor), or an auxiliary processor (e.g., a GPU, a neural processing unit (NPU), an image signal processor (ISP), a sensor hub processor, or a communication processor (CP)) that may be operable independently from, or in conjunction with, the main processor. For example, when the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the processor may obtain image frame data from at least one of the memory 120, the image input unit 130, or the communication circuit 150. The processor may receive image frame data from at least one of the memory 120, the image input unit 130, or the communication circuit 150. The image frame data may include data regarding a frame constituting an image. For example, the image frame data may be identified from the memory 120 (e.g., an image recorded and/or stored). For example, the image frame data may include data obtained from the communication circuit 150 or the image input unit 130 (e.g., real-time streaming image).

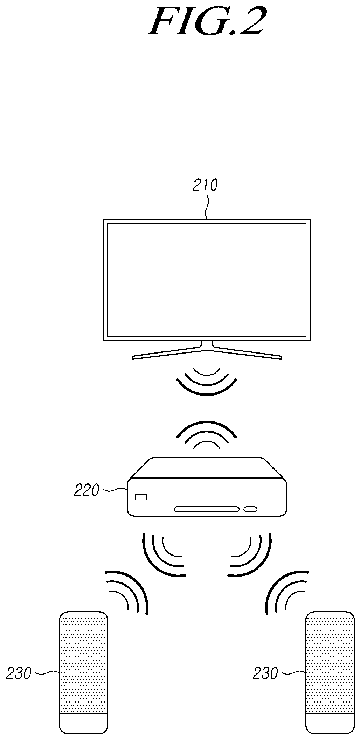

FIG. 2 illustrates an example of an IoT network, according to an embodiment. The display device 210 of FIG. 2 may include and/or may be similar in many respects to the electronic device 100 of FIG. 1, and may include additional features not mentioned above. Consequently, repeated descriptions of the display device 210 described above with reference to FIG. 1 may be omitted for the sake of brevity.

According to an embodiment, the display device 210, the wireless image transmission/reception device 220, and the speaker 230 may wirelessly transmit and receive data.

According to an embodiment, the wireless image transmission/reception device 220 may include a device for wirelessly transmitting/receiving video data and/or audio data.

In an embodiment, the wireless image transmission/reception device 220 may transmit image data to the display device 210 and/or may transmit audio data to the speaker 230.

In an embodiment, the wireless image transmission/reception device 220 may include a transmitter for collecting and/or encoding video and audio data, converting the video and audio data into a wireless signal, and transmitting the wireless signal, a receiver for receiving and decoding the wireless signal and identifying the video data and the audio data, an antenna for transmitting/receiving the wireless signal, and a user interface for controlling and monitoring settings of the wireless image transmission/reception device.

In an embodiment, the wireless image transmission/reception device 220 may be connected to various types of input/output devices. For example, the wireless image transmission/reception device 220 may be wiredly and/or wirelessly connected to an HDMI device (e.g., a set-top box (STB), a game console, or the like). As another example, the wireless image transmission/reception device 220 may be wirelessly connected to the display device 210 and the speaker 230.

In an embodiment, the speaker 230 may receive sound data from the display device 210, the wireless image transmission/reception device 220, an AP, or the like, and may output the sound data.

In an embodiment, the speaker 230 may transmit the input data to the display device 210, the wireless image transmission/reception device 220, the AP, or the like. For example, the speaker 230 may process data, generate a signal, and transmit the signal to another device, based on a user input identified using user speech recognition technology.

In an embodiment, the wireless image transmission/reception device 220 may be wiredly and/or wirelessly connected to another device (e.g., the display device 210) through Bluetooth^{™}, Wi-Fi, or the like.

In an embodiment, the IoT environment may include an access point (AP) for connecting to a network with the display device 210, the wireless image transmission/reception device 220, and the speaker 230. The display device 210, the wireless image transmission/reception device 220, and the speaker 230 may communicate data with the network (e.g., a Wi-Fi network) through the AP.

In an embodiment, the AP may transmit a synchronization signal (e.g., a timestamp).

In an embodiment, the AP may broadcast a synchronization signal to adjacent devices.

In an embodiment, the synchronization signal may include accurate time information (e.g., clock information) about the network.

In an embodiment, the other devices (e.g., the display device 210, the wireless image transmission/reception device 220, and the speaker 230) receiving the synchronization signal from the AP may perform synchronization based on the time information about the network included in the synchronization signal.

In an embodiment, the display device 210, the wireless image transmission/reception device 220, and the speaker 230 may perform synchronization based on the synchronization signal, and may perform image output, sound output, and data transmission based thereon.

In an embodiment, the display device 210, the wireless image transmission/reception device 220, and the speaker 230 may transmit (e.g., unicast, multicast, broadcast, or the like) the time information about the network included in the synchronization information received from the AP to other devices. That is, the synchronization signal of the network may be received from the AP, but may be exchanged between other IoT devices connected to the AP.

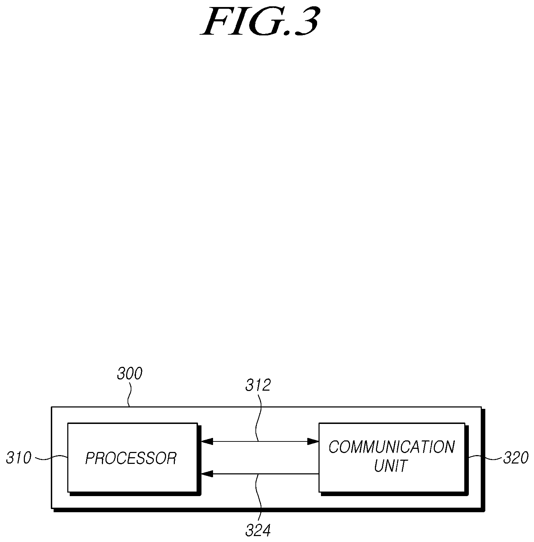

FIG. 3 is a block diagram illustrating a configuration of another electronic device, according to an embodiment. The electronic device 300 of FIG. 3 may include and/or may be similar in many respects to the electronic device 100 of FIG. 1, and may include additional features not mentioned above. Consequently, repeated descriptions of the electronic device 300 described above with reference to FIG. 1 may be omitted for the sake of brevity.

According to an embodiment, the electronic device 300 may include a processor 310 and a communication circuit 320.

In an embodiment, the processor 310 may include an application processor or a digital signal processor (DSP). In an embodiment, the processor 310 may include a configuration corresponding to the processor 110 of FIG. 1.

In an embodiment, the processor 310 may process a voice, music, an image, and other digital signals based on the clock of the processor 310. The clock of the processor 310 may determine a time interval required to convert, filter, compress, remove noise, and/or process other tasks of the digital signal.

In an embodiment, the communication circuit 320 may include a Wi-Fi integrated circuit (IC). The communication circuit 320 may connect the electronic device 300 to the Wi-Fi network and perform a function of transmitting data.

In an embodiment, the communication circuit 320 may transmit and/or receive a wireless signal to/from another IoT device or an access point (AP).

In an embodiment, the communication circuit 320 may perform synchronization of the clock of the communication circuit 320 based on a synchronization signal (e.g., a timestamp) received from an AP or another IoT device. For example, the communication circuit 320 may perform synchronization based on a beacon signal received from the AP, and may receive data from the AP.

In an embodiment, the processor 310 and the communication circuit 320 may be wiredly and/or wirelessly connected via a first interface 312. The first interface 312 may include an interface using a universal serial bus (USB) interface. The processor 310 and the communication circuit 320 may perform bidirectional communication via the first interface 312.

In an embodiment, the processor 310 may receive clock information about the communication circuit 320 via the first interface 312.

In an embodiment, the processor 310 and the communication circuit 320 may be wiredly and/or wirelessly connected via a second interface 324. The second interface 324 may include an interface using a general purpose input output (GPIO) interface. An interrupt signal generated by the communication circuit 320 may be transferred to the processor 310 via the second interface 324.

In an embodiment, the processor 310 may request clock information about the communication circuit 320 from the communication circuit 320.

In an embodiment, the communication circuit 320 may identify the clock of the communication circuit 320 in response to receiving the clock information request from the processor 310.

In an embodiment, at the time when the communication circuit 320 identifies the clock of the communication circuit 320, the communication circuit 320 may generate an interrupt signal, and the generated interrupt signal may be transferred to the processor 310 via the second interface 324.

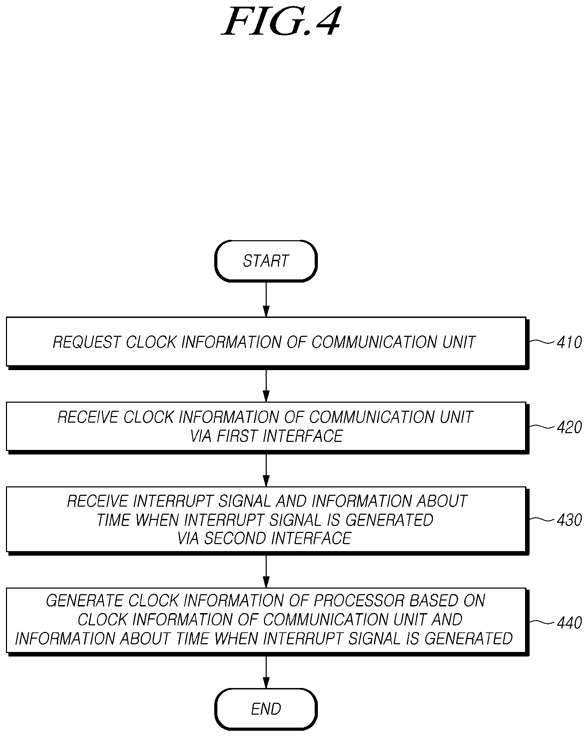

FIG. 4 illustrates an operation flow of an electronic device, according to an embodiment. The operation flow of the electronic device of FIG. 4 may include a control operation flow of a processor (e.g., the processor 110 or the processor 310) included in the electronic device. In the description of FIG. 4, descriptions overlapping those described with reference to FIGS. 1 to 3 may be omitted for the sake of brevity.

In an embodiment, the electronic device may perform synchronization based on the clock value of the processor. The electronic device and other external electronic devices need to perform synchronization to transmit audio/visual (AV) data. The clock value of the processor may be used to perform synchronization. However, the clock values may be different between the processors of the devices, causing the data transmission timing to be inconsistent. The electronic device and other devices may be wiredly and/or wirelessly connected to the same Wi-Fi network, and synchronization may be maintained by receiving a synchronization signal (e.g., a timestamp) between devices connected to the same Wi-Fi network. The present disclosure relates to a device and method for enabling synchronization even without a round-to-trip (RTT) scheme between devices, by correcting the difference in clock value between the respective processors of the devices using the clock value of the Wi-Fi module (e.g., Wi-Fi IC) that may maintain synchronization.

According to an embodiment, in operation 410, the processor (e.g., DSP or application processor) of the electronic device may request clock information of a communication unit (e.g., the communication circuit 150 or the communication circuit 320). The clock information of the communication unit received in operation 410 may be referred to as a first clock value.

In an embodiment, the processor of the electronic device may request clock information of the communication unit from the communication unit. For example, the application processor may request current time information from the Wi-Fi IC via USB. The current time information of the Wi-Fi IC may include information that may be accurately maintained based on the synchronization signal (e.g., timestamp) received from the network by the access point.

In an embodiment, the synchronization signal received from the network may include a signal used to manage time synchronization and timing information in the wireless network. For example, the synchronization signal may correspond to a timestamp defined in an IEEE 802.11 communications standard. The timestamp may be used to synchronize a client device (e.g., the electronic device 100, the display device 210, the wireless image transmission/reception device 220, or the speaker 230) and a network, and may be expressed in nanoseconds (nsec). The synchronization signal may be generated and/or transmitted by an access point.

In an embodiment, the synchronization signal may include network time information. Accordingly, devices connected to the network may operate based on the same time.

In an embodiment, a radio frame (e.g., a data frame, a management frame, or the like) may be synchronized based on the synchronization signal. For example, the data sending device may indicate the generation time of the frame based on the timestamp. The data receiving device may track the arrival time of the frame based on the timestamp and calculate the time difference to communicate with the data sending device.

In an embodiment, the communication unit of the electronic device may read the clock value of the communication unit in response to receiving a clock information request of the communication unit from the processor.

In an embodiment, the communication unit of the electronic device may generate an interrupt signal at the time when the clock value of the communication unit is read. For example, after reading the time information of the Wi-Fi IC, the Wi-Fi IC may generate an interrupt signal using a GPIO pin to notify the processor of the electronic device that the time information of the Wi-Fi IC is ready.

In an embodiment, the communication unit of the electronic device may transmit the interrupt signal to the processor.

According to an embodiment, in operation 420, the processor of the electronic device may receive clock information of the communication unit via the first interface.

In an embodiment, the first interface may include an USB interface between the processor and the communication unit.

In an embodiment, the electronic device may be configured to identify the first clock value based on the first synchronization signal received through the communication unit, device.

In an embodiment, the first synchronization signal may include a synchronization signal received through an external electronic device (e.g., an access point). For example, the first synchronization signal may include a timestamp received from the access point.

In an embodiment, the first synchronization signal may include information about a network (e.g., a Wi-Fi network) to which the electronic device is connected. For example, the first synchronization signal may include, but not be limited to, network identification information, address information, or the like.

According to an embodiment, in operation 430, the processor of the electronic device may receive an interrupt signal and information about the time when the interrupt signal is generated via the second interface from the communication unit.

In an embodiment, the communication unit may receive a clock information request of the communication unit from the processor, and accordingly, identify the clock information of the communication unit (e.g., read the clock value of the Wi-Fi IC based on the timestamp). The communication unit may identify clock information and generate an interrupt signal to transmit the interrupt signal via the GPIO to the processor of the electronic device.

In an embodiment, the second interface may include an interface via the GPIO between the processor and the communication unit.

In an embodiment, the processor may detect the interrupt signal received from the communication unit and identify information about the time when the interrupt signal is generated, based on the interrupt signal.

According to an embodiment, in operation 440, the processor of the electronic device may generate clock information of the processor, based on the clock information of the communication unit and the information about the time when the interrupt signal is generated.

According to an embodiment, the electronic device may determine whether to generate the clock information of the processor, based on the clock information of the communication unit and a difference in the time when the interrupt signal is generated.

In an embodiment, the clock value of the processor may include the clock value of a system. That is, the clock value of the processor may include the system clock value used to synchronize with another device.

In an embodiment, the clock information of the processor may be generated based on the clock information of the communication unit and the information about the time when the interrupt signal is generated.

In an embodiment, the electronic device may transmit a second synchronization signal to the external electronic device. Thereafter, the electronic device may receive an ACK signal for the second synchronization signal from the external electronic device. The electronic device may identify clock information of the processor based on the time when the second synchronization signal is transmitted and the time when the ACK signal is received. The clock information may correspond to the content of the operation for synchronizing the system clock value of the electronic device when the electronic device is a transmission device.

In an embodiment, the electronic device may receive the second synchronization signal from the external electronic device. The electronic device may identify the clock information of the processor based on the information about the transmission time included in the second synchronization signal and the information about the time when the second synchronization signal is received. The clock information may correspond to the content of the operation for synchronizing the system clock value of the electronic device when the electronic device is the reception device.

In an embodiment, the electronic device may determine whether to correct the clock information of the processor, based on a plurality of offset values identified for a predetermined time.

In an embodiment, the offset value may include a difference between the clock information of the communication unit and the clock information of the processor. That is, the offset value may refer to a difference between the clock value of the communication unit identified through the Wi-Fi network and the clock value of the processor.

In an embodiment, the plurality of offset values may be identified based on the difference between the first clock value identified by the communication unit every predetermined period and clock information of the processor.

In an embodiment, when the electronic device identifies that the plurality of offset values continuously increase for a predetermined time or when the electronic device identifies that the plurality of offset values continuously decrease for the predetermined time, the electronic device may determine to correct the clock information of the processor.

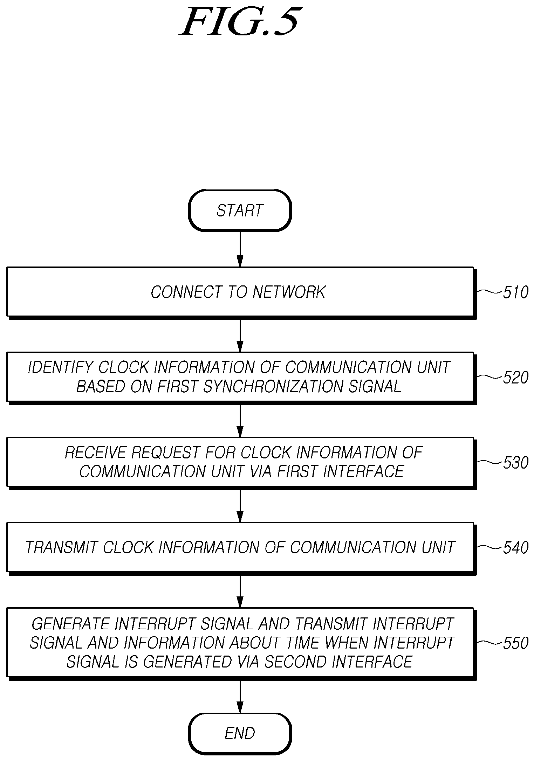

FIG. 5 illustrates an operation flow of an electronic device, according to an embodiment. The operation flow of the electronic device described with reference to FIG. 5 may include an operation of controlling the communication unit of the electronic device. In the description of FIG. 5, the same description as that made with reference to FIG. 4 may be omitted for the sake of brevity.

According to an embodiment, in operation 510, the electronic device may be connected to the network through the communication unit. The communication unit of the electronic device may be connected to an access point and may thus be connected to a Wi-Fi network.

In an embodiment, the network may include a Wi-Fi network.

According to an embodiment, in operation 520, the communication unit of the electronic device may identify the first clock value based on the first synchronization signal.

In an embodiment, the first synchronization signal may include a timestamp received from the access point.

In an embodiment, the first synchronization signal may include network information about the network to which the electronic device is connected.

According to an embodiment, in operation 530, the communication unit of the electronic device may receive a first clock value request from the processor.

In an embodiment, the first clock value may include the clock value of the Wi-Fi IC.

In an embodiment, the communication unit of the electronic device may identify the first clock value of the communication unit in response to receiving the first clock value request from the processor.

In an embodiment, the communication unit of the electronic device may generate an interrupt signal in response to identifying the first clock value.

According to an embodiment, in operation 540, the communication unit of the electronic device may transmit information about the transmission time of the first clock value.

According to an embodiment, the communication unit of the electronic device may transmit the interrupt signal to the processor via the second interface. The second interface may include an interface through a GPIO between the processor and the communication unit.

According to an embodiment, in operation 550, the communication unit of the electronic device may transmit a first clock value.

In an embodiment, the communication unit of the electronic device may transmit the first clock value to the processor through the first interface. The first interface may include an interface through USB of the processor and the communication unit.

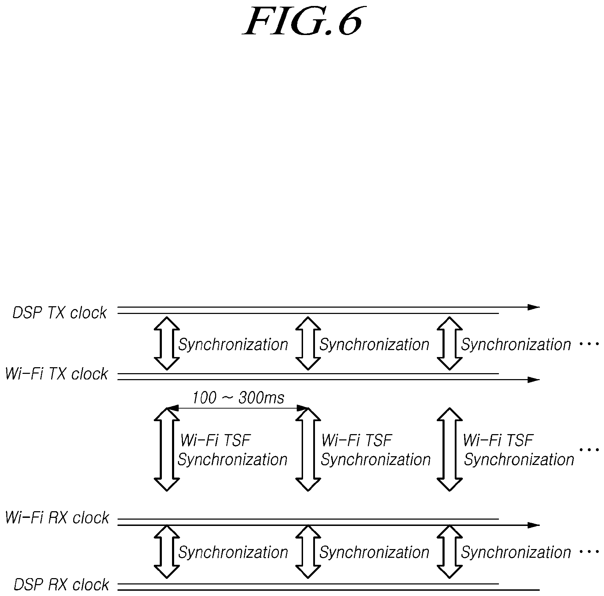

FIG. 6 illustrates an example of synchronization of an electronic device according to an embodiment.

Referring to FIG. 6, in an embodiment, a clock (DSP TX clock) of a processor of a transmission device may be synchronized based on a clock (Wi-Fi TX clock) value of a communication unit of the transmission device. As described above with reference to FIGS. 3 to 5, synchronization of the transmission device may be periodically performed based on a signal received via USB and an interrupt signal received via GPIO.

In an embodiment, the clock (DSP RX clock) of the processor of the reception device may be synchronized based on the clock (Wi-Fi RX clock) value of the communication unit of the reception device. As described above with reference to FIGS. 3 to 5, synchronization of the reception device may be periodically performed based on a signal received via USB and an interrupt signal received via GPIO.

In an embodiment, the transmission device and the reception device may perform mutual synchronization. That is, a Wi-Fi timer synchronization function (TSF) synchronization may be performed. Each of the transmission device and the reception device may internally perform synchronization through each processor and Wi-Fi IC, and based thereon, perform synchronization with another device, so that synchronization for transmission of AV data between devices may be accurately performed.

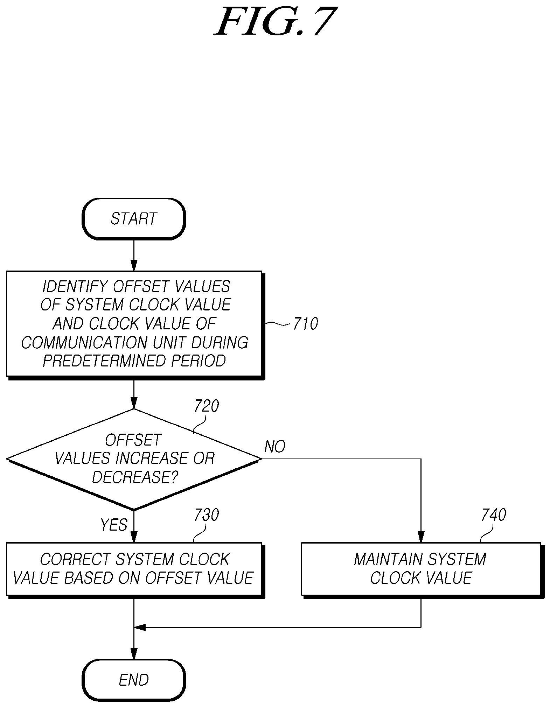

FIG. 7 illustrates an operation flow of an electronic device according to an embodiment.

According to an embodiment, in operation 710, the electronic device may identify the clock value of the communication unit and the offset values of the system clock value during a predetermined period.

In an embodiment, the predetermined period may be predetermined by the electronic device in a range of about 100 milliseconds (ms) to about 300 ms, as illustrated in FIG. 6.

In an embodiment, the offset value between the clock value of the communication unit and the system clock value may include a difference between the clock value of the communication unit and the clock value of the processor described above with reference to FIGS. 1 to 5.

According to an embodiment, in operation 720, the electronic device may determine whether offset values increase or decrease. Since the processor and the communication unit are different components, there may be a difference between the clock values. However, when the difference between the clock value of the processor and the clock value of the communication unit constantly increases or decreases, the electronic device may determine that an error has occurred. Therefore, in such a case, the electronic device may correct the clock value of the processor based on the clock value of the communication unit.

In an embodiment, when the electronic device has identified that the offset values are increased or decreased by a predetermined value or more for a predetermined time, the electronic device may determine that the offset values are increased or decreased.

In an embodiment, when the electronic device has determined that the offset values increase or decrease (YES in operation 720), the electronic device may perform operation 730. When the electronic device has determined that the offset values do not increase or decrease (NO in operation 720), the electronic device may perform operation 740.

According to an embodiment, in operation 730, the electronic device may correct the system clock value based on the offset value. The electronic device may correct the system clock value based on the clock value of the communication unit. Since the clock value of the communication unit may be a relatively accurate clock value periodically synchronized by the timestamp received by the electronic device from the access point, accurate synchronization may be performed by correcting the clock value of the processor based on the clock value of the communication unit.

According to an embodiment, in operation 740, when the electronic device has determined that the offset values do not increase or decrease, the electronic device may determine that it may not be necessary to correct the system clock value and may maintain the system clock value.

An electronic device according to an embodiment of the disclosure may comprise a communication unit, and a processor electrically connected to the communication unit via a first interface or a second interface. The processor may send a request for clock information of the communication unit to the communication unit via the first interface, receive the clock information of the communication unit via the first interface, receive an interrupt signal and information about a time when the interrupt signal is generated from the communication unit through the second interface, and generate clock information of the processor based on the clock information of the communication unit and the information about the time when the interrupt signal is generated.

In an embodiment, the first interface may include an interface using universal serial bus (USB), and the second interface may include an interface using general purpose input output (GPIO).

In an embodiment, the communication unit may generate the interrupt signal in response to receiving the clock information request of the communication unit from the processor.

In an embodiment, the information about the time when the interrupt signal is generated may be included in the interrupt signal.

In an embodiment, the processor may identify the clock information of the communication unit based on a first synchronization signal received through the communication unit.

In an embodiment, the first synchronization signal may include information about a network to which the electronic device is connected.

In an embodiment, the processor may transmit a second synchronization signal to an external electronic device, receive an acknowledgement (ACK) signal from the external electronic device, and generate the clock information of the processor, based on a time when the second synchronization signal is transmitted and a time when the ACK signal is received.

In an embodiment, the processor may receive a second synchronization signal from an external electronic device, and generate the clock information of the processor, based on information about a transmission time included in the second synchronization signal and information about a time when the second synchronization signal is received.

In an embodiment, the processor may determine whether to correct the clock information of the processor based on a plurality of offset values identified for a predetermined time. The plurality of offset values may be identified based on a difference between the clock information of the communication unit and the clock information of the processor.

In an embodiment, the processor may correct the clock information of the processor when the processor identifies that the plurality of offset values continuously increase for the predetermined time or when the processor identifies that the plurality of offset values continuously decrease for the predetermined time.

A method for operating an electronic device, according to an embodiment of the disclosure, may comprise sending, by a processor of the electronic device, a request for clock information of a communication unit of the electronic device to the communication unit via a first interface, transmitting, by the communication unit, the clock information of the communication unit to the processor via the first interface, transmitting, by the communication unit, an interrupt signal and information about a time when the interrupt signal is generated to the processor via a second interface, and generating, by the processor, clock information of the processor based on the clock information of the communication unit and the information about the time when the interrupt signal is generated.

In an embodiment, the first interface may include an interface using universal serial bus (USB), and the second interface may include an interface using general purpose input output (GPIO).

In an embodiment, wherein the interrupt signal is generated by the communication unit in response to receiving the clock information request from the processor.

In an embodiment, the interrupt signal may include the information about the time when the interrupt signal is generated.

In an embodiment, the method for operating the electronic device may further comprise identifying, by the communication unit, the clock information of the communication unit based on a first synchronization signal received through the communication unit.

In an embodiment, the first synchronization signal may include information about a network to which the electronic device is connected.

In an embodiment, the method for operating the electronic device may further comprise transmitting, by the communication unit, a second synchronization signal to an external electronic device, receiving, by the communication unit, an acknowledgement (ACK) signal from the external electronic device, and generating, by the processor, the clock information of the processor, based on a time when the second synchronization signal is transmitted and a time when the ACK signal is received.

The method for operating the electronic device may further comprise receiving, by the communication unit, a second synchronization signal from an external electronic device, and generating, by the processor, the clock information of the processor, based on information about a transmission time included in the second synchronization signal and information about a time when the second synchronization signal is received.

In an embodiment, the method for operating the electronic device may further comprise determining, by the processor, whether to correct the clock information of the processor based on a plurality of offset values identified for a predetermined time. The plurality of offset values may be identified based on a difference between the clock information of the communication unit and the clock information of the processor.

In an embodiment, the method for operating the electronic device may further comprise correcting the clock information of the processor when the electronic device identifies that the plurality of offset values continuously increase for the predetermined time or when the electronic device identifies that the plurality of offset values continuously decrease for the predetermined time.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It may be apparent that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the electronic device 100 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD)). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two (2) user equipment (UEs) (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
a communication circuit comprising a first interface and a second interface;
a memory storing instructions; and
a processor communicatively coupled with the communication circuit via the first interface or via the second interface, wherein the processor is configured to execute the instructions to:
send, to the communication circuit via the first interface, a request for clock information of the communication circuit;
receive, from the communication circuit via the first interface, the clock information of the communication circuit;
receive, from the communication circuit via the second interface, an interrupt signal and first time information corresponding to the interrupt signal being generated; and
generate clock information of the processor based on the clock information of the communication circuit and the first time information.

2. The electronic device of claim 1, wherein the first interface comprises a universal serial bus (USB) interface, and
wherein the second interface comprises a general purpose input output (GPIO) interface.

3. The electronic device of claim 1, wherein the communication circuit is configured to generate the interrupt signal based on receiving, from the processor, the request for the clock information of the communication circuit.

4. The electronic device of claim 1, wherein the communication circuit is configured to generate the interrupt signal comprising the first time information.

5. The electronic device of claim 1, wherein the communication circuit is further configured to execute the instructions to identify the clock information of the communication circuit based on a first synchronization signal received via the communication circuit.

6. The electronic device of claim 5, wherein the first synchronization signal comprises information about a network to which the electronic device is coupled.

7. The electronic device of claim 1, wherein the processor is further configured to execute the instructions to:
transmit, to an external electronic device, a synchronization signal;
receive, from the external electronic device, an acknowledgement (ACK) signal based on the synchronization signal; and
generate the clock information of the processor, based on transmission time information corresponding to the synchronization signal being transmitted and reception time information corresponding to the ACK signal being received.

8. The electronic device of claim 1, wherein the processor is further configured to execute the instructions to:
receive, from an external electronic device, a synchronization signal comprising second time information corresponding to the synchronization signal being transmitted; and
generate the clock information of the processor, based on the second time information and reception time information corresponding to the synchronization signal being received.

9. The electronic device of claim 1, wherein the processor is further configured to execute the instructions to determine whether to correct the clock information of the processor based on a plurality of offset values identified for a predetermined time, and
wherein the plurality of offset values are identified based on a difference between the clock information of the communication circuit and the clock information of the processor.

10. The electronic device of claim 9, wherein the processor is further configured to execute the instructions to correct the clock information of the processor based on identifying that the plurality of offset values continuously increase for the predetermined time or identifying that the plurality of offset values continuously decrease for the predetermined time.

11. A method for operating an electronic device, the method comprising:
sending, to a communication circuit of the electronic device via a first interface of the communication circuit, a request for clock information of the communication circuit;
receiving, via the first interface, the clock information of the communication circuit from the communication circuit;
receiving, via a second interface of the communication circuit, an interrupt signal and first time information corresponding to the interrupt signal being generated from the communication circuit; and
generating clock information of the processor based on the clock information of the communication circuit and the first time information.

12. The method of claim 11, wherein the sending, to the communication circuit via the first interface, the request for the clock information comprises sending, to the communication circuit of the electronic device using a universal serial bus (USB) interface of the communication circuit, the request for the clock information of the communication circuit, and
wherein the receiveing, via the second interface, the interrupt signal and the first time information comprises receiving, using a general purpose input output (GPIO) interface, the interrupt signal and the first time information from the communication circuit.

13. The method of claim 11,
wherein the interrupt signal is generated by the communication circuit in response to receiving the clock information request from the processor.

14. The method of claim 11, wherein the interrupt signal comprising the first time information.

15. The method of claim 11, wherein the clock information of the communication circuit is identified based on a first synchronization signal received via the communication circuit.
